# FASCICULE DE BREVET EUROPEEN

(11) **EP 3 329 418 B1**
(45) Date de publication et mention de la délivrance du brevet: **22.10.2025**
(21) Numéro de dépôt: 16750706.0
(22) Date de dépôt: 01.08.2016
(51) Int. Cl.: G06V 20/56

(54) **DISPOSITIF DE DÉTECTION, VÉHICULE AUTOMOBILE ÉQUIPÉ D'UN TEL DISPOSITIF DE DÉTECTION, ET PROCÉDÉ DE DÉTECTION ASSOCIÉ**
DETEKTIONSVORRICHTUNG, MIT SOLCH EINER DETEKTIONSVORRICHTUNG AUSGESTATTETES KRAFTFAHRZEUG UND ZUGEHÖRIGES DETEKTIONSVERFAHREN
DETECTION DEVICE, MOTOR VEHICLE PROVIDED WITH SUCH A DETECTION DEVICE, AND ASSOCIATED DETECTION METHOD

(30) Priorité: 31.07.2015 FR 1557378
(43) Date de publication de la demande: 06.06.2018
(73) Titulaire: Valeo Schalter und Sensoren GmbH, 74321 Bietigheim-Bissingen (DE)
(72) Inventeur: PEROT, Etienne, 94046 Créteil Cedex (FR); PINCHON, Nicolas, 94046 Créteil Cedex (FR); GARNIER, Denis, 94046 Créteil Cedex (FR)
(74) Mandataire: Jauregui Urbahn, Kristian
(86) Numéro de dépôt international: PCT/EP2016/068343
(87) Numéro de publication internationale: WO 2017/021375

(56) Documents cités:
- WO-A2-2012/145313
- US-A1- 2005 206 511
- US-A1- 2007 272 884

## Description

### DOMAINE TECHNIQUE AUQUEL SE RAPPORTE L'INVENTION

La présente invention concerne de manière générale le domaine des dispositifs de détection d'amas de matière, par exemple de gouttes d'eau, sur un vitrage d'observation que comporte un véhicule automobile.

L'invention concerne également un procédé de détection associé, et un véhicule automobile équipé d'un tel dispositif.

Elle concerne plus particulièrement un dispositif de détection d'amas de matière sur un vitrage d'observation d'un véhicule automobile, comprenant une caméra vidéo.

### ARRIERE-PLAN TECHNOLOGIQUE

La présence d'amas de matière, par exemple de gouttes d'eau, sur le pare-brise ou la lunette arrière d'un véhicule automobile est particulièrement gênant pour le conducteur de ce véhicule, qui voit ainsi moins distinctement la route sur laquelle circule le véhicule. De tels amas de matière peuvent en outre dégrader la qualité d'images de cette route enregistrées par une caméra d'un système d'aide à la conduite, installée dans l'habitacle du véhicule.

Le document US 2014/0036084 décrit une caméra installée dans l'habitacle d'un véhicule automobile, derrière le pare-brise de ce véhicule, et permettant d'obtenir des images d'un environnement routier faisant face à ce véhicule. Cette caméra comprend un capteur d'images associé à un objectif comprenant une lentille liquide de focale ajustable. Ce document décrit par ailleurs qu'une des applications du caractère ajustable de la focale de cette lentille consiste à détecter des objets à différentes distances de la caméra, par exemple des panneaux routiers, et à détecter de la pluie sur le pare-brise du véhicule. Le document US 2005/206511 A1 divulgue un système similaire.

### OBJET DE L'INVENTION

Dans ce contexte, la présente invention propose un dispositif de détection, adapté à être installé dans un habitacle de véhicule automobile délimité par un vitrage d'observation, comprenant :
- un capteur d'images,
- un système optique, associé optiquement au capteur d'images et comportant des moyens de mise au point commandables, et
- un module de commande conçu pour commander les moyens de mise au point de manière à former sur le capteur d'images une image nette d'une première zone du vitrage d'observation, et pour déclencher une prise de vue de manière à obtenir une première image du vitrage d'observation correspondante.

Selon l'invention, le module de commande est conçu en outre pour commander les moyens de mise au point de manière à former sur le capteur d'images une image nette d'une deuxième zone du vitrage d'observation, plus proche du système optique que ladite première zone du vitrage d'observation, et pour déclencher une prise de vue de manière à obtenir une deuxième image du vitrage d'observation correspondante, et le dispositif de détection comprend en outre un module d'analyse conçu pour détecter un amas de matière situé sur le vitrage d'observation, par analyse desdites première et deuxième images du vitrage d'observation.

La demanderesse a constaté que, du fait de l'inclinaison d'un tel vitrage d'observation par rapport au système optique du dispositif de détection, et du fait de la profondeur de champ réduite de son système optique lorsque la mise au point est faite sur des objets proches, dans une image de ce vitrage obtenue pour un réglage de mise au point donné, la zone du vitrage visualisée de manière nette est d'étendue réduite. Un, ou des amas de matière ne peuvent alors être détectés efficacement que sur une zone d'étendue réduite de ce vitrage d'observation.

Grâce à l'invention, en particulier grâce à l'obtention de plusieurs images de ce vitrage, associées respectivement à des réglages de mise au point différents, plusieurs zones du vitrage, au moins partiellement distinctes, sont visualisées de manière nette.

La combinaison de ces zones visualisées de manière nette couvre alors une partie du vitrage avantageusement plus grande que lorsqu'une seule image du vitrage est utilisée.

La détection d'un ou de plusieurs amas de matière sur ce vitrage, par analyse desdites images du vitrage d'observation, en est d'autant plus efficace, et la partie du vitrage sur laquelle de tels amas peuvent être détectés est avantageusement étendue.

Préférentiellement, il est prévu que le module de commande soit conçu en outre pour commander les moyens de mise au point de manière à former sur le capteur d'images une image nette d'une zone d'un environnement extérieur du véhicule distante du véhicule, et pour déclencher une prise de vue de manière à obtenir une image correspondante de cet environnement extérieur.

Ainsi, en plus de sa fonction de détection d'amas de matière sur le vitrage d'observation, ce dispositif est adapté à obtenir une image de l'environnement extérieur du véhicule, par exemple d'un tronçon de route lui faisant face. Cette image de l'environnement extérieur du véhicule automobile peut avantageusement être utilisée pour assurer des fonctions d'aide à la conduite, telles que la détection de marquages au sol, de panneaux routiers, ou d'obstacles.

La détection d'amas de matière sur le vitrage d'observation est ainsi doublement utile, ici, car de tels amas de matière sont gênants pour le conducteur du véhicule, mais réduisent aussi les performances d'un système d'aide à la conduite utilisant la ou les images de l'environnement extérieur du véhicule obtenues par le dispositif de détection.

D'autres caractéristiques du dispositif de détection selon l'invention sont les suivantes :
- le module de commande est conçu pour commander les moyens de mise au point, de manière faire la mise au point, à des instants successifs, sur des zones au moins partiellement distinctes du vitrage d'observation, et pour déclencher une prise de vue à chacun desdits instants, de manière à obtenir, par cette série de prises de vues du vitrage d'observation, une série d'images respectives du vitrage d'observation, puis pour commander les moyens de mise au point de manière à faire la mise au point sur une zone au moins de l'environnement extérieur du véhicule, et pour déclencher une série de prises de vues de l'environnement extérieur de manière à obtenir une série d'images correspondantes de l'environnement extérieur ;
- le module de commande est conçu pour augmenter le nombre d'images obtenues lors d'une série de prises de vues du vitrage d'observation, lorsque le module d'analyse détecte un amas de matière situé sur le vitrage d'observation ;

D'autres caractéristiques non limitatives et avantageuses du dispositif de détection conforme à l'invention sont les suivantes :
- le module de commande est conçu pour que la durée de la série de prises de vues du vitrage d'observation soit inférieure à la durée de la série de prises de vue de l'environnement extérieur ;
- le module de commande est conçu pour commander de manière réitérée la séquence d'opérations comprenant le déclenchement de la série de prises de vues du vitrage d'observation puis le déclenchement de la série de prises de vues de l'environnement extérieur ;
- le module de commande est conçu pour réduire la durée séparant deux séries de prises de vues du vitrage d'observation successives lorsque le module d'analyse détecte un amas de matière situé sur le vitrage d'observation ;
- le module de commande est adapté à commander des moyens d'élimination d'un amas de matière situé sur le vitrage d'observation lorsque le module d'analyse détecte un amas de matière situé sur le vitrage d'observation ;
- le module de commande est adapté à commander des moyens de signalisation de la présence d'un amas de matière sur le vitrage d'observation, lorsque le module d'analyse détecte un amas de matière situé sur le vitrage d'observation ; et
- les moyens de mise au point commandables comprennent une lentille liquide de focale commandable.

L'utilisation d'une lentille liquide, de focale commandable, est particulièrement intéressante ici. En effet, sa focale peut être modifiée très rapidement, ce qui permet de modifier le réglage de mise au point du dispositif tout aussi rapidement. Un balayage de ce réglage de mise au point peut donc être réalisé à une vitesse élevée, afin d'acquérir une pluralité d'images du vitrage, correspondant à des réglages de mise au point différents, en un temps court. Cela permet d'assurer la fonction de détection d'amas de matière du dispositif, tout en libérant avantageusement du temps pour l'acquisition d'une ou de plusieurs images de l'environnement extérieur du véhicule, par exemple aux fins d'aide à la conduite mentionnées ci-dessus.

On peut prévoir également que :
- le dispositif de détection est adapté à être installé dans un habitacle de véhicule automobile délimité par un vitrage d'observation qui comprend un pare-brise de ce véhicule ;
- l'amas de matière comprend une goutte d'eau ;
- l'amas de matière sur le vitrage d'observation comprend de la neige, du givre ou de la buée formé sur le vitrage d'observation, de la boue, ou encore une salissure.

L'invention propose également un véhicule automobile comprenant un habitacle délimité par un vitrage d'observation, équipé d'un dispositif tel que décrit ci-dessus.

L'invention propose aussi un procédé de détection comprenant des étapes de :
- commande de moyens de mise au point d'un système optique, de manière à former sur un capteur d'images une image nette d'une première zone d'un vitrage d'observation délimitant un habitacle de véhicule,
- déclenchement d'une prise de vue de manière à obtenir une première image du vitrage d'observation correspondante,
- commande desdits moyens de mise au point de manière à former sur le capteur d'images une image nette d'une deuxième zone du vitrage d'observation, plus proche du système optique que ladite première zone du vitrage d'observation,
- déclenchement d'une prise de vue de manière à obtenir une deuxième image du vitrage d'observation correspondante, et de
- détection d'un amas de matière situé sur le vitrage d'observation, par analyse desdites première et deuxième images du vitrage d'observation.

Les caractéristiques supplémentaires présentées ci-dessus pour le dispositif sont également appliquées à ce procédé.

Les caractéristiques optionnelles présentées ci-dessus pour le dispositif peuvent également s'appliquer à un tel procédé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un exemple de dispositif de détection selon l'invention, et
- la figure 2 représente schématiquement un véhicule automobile, équipé du dispositif de détection de la figure 1, et
- la figure 3 représente schématiquement un exemple de procédé de détection selon l'invention, mis en œuvre ici dans le dispositif de détection de la figure 1.

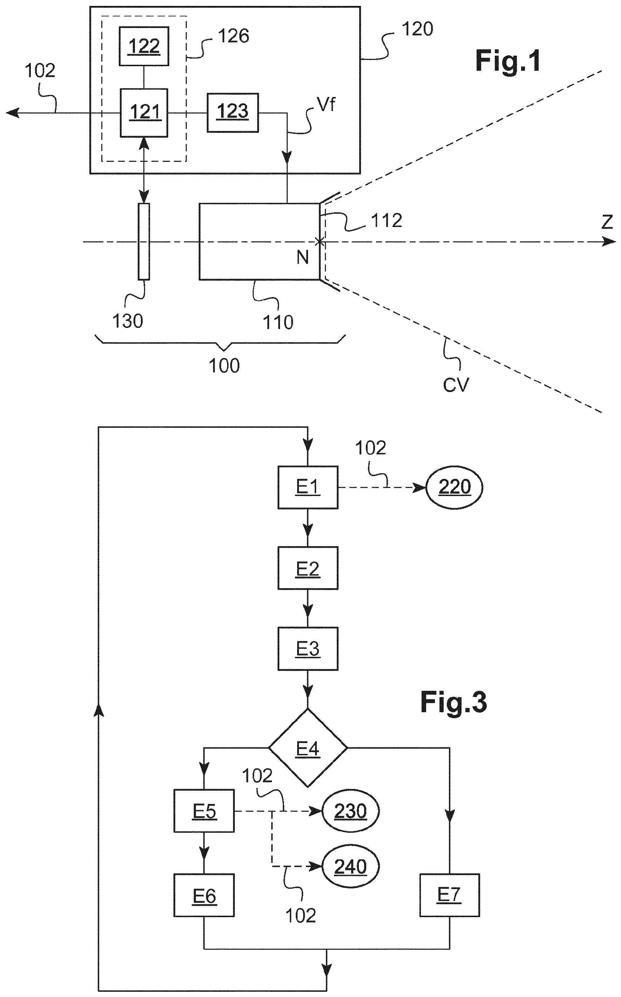

Sur la figure 1, on peut voir les principaux éléments d'un dispositif de détection 100, conforme aux enseignements de l'invention.

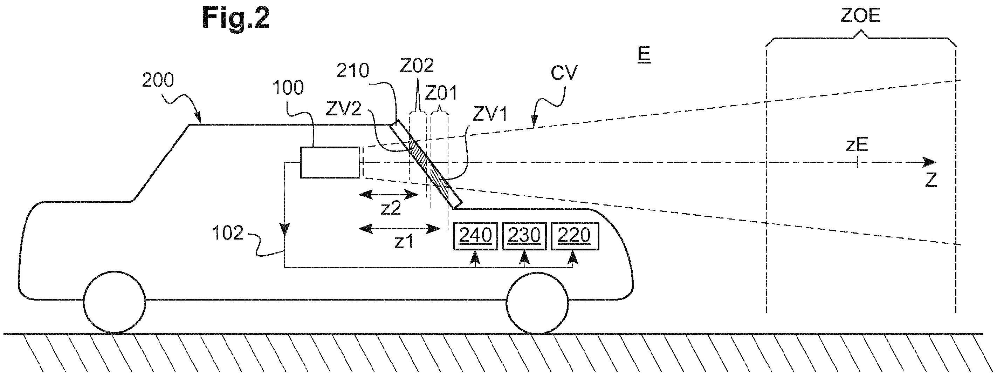

Dans ce dispositif de détection 100, la détection d'amas de matière présents sur un vitrage d'observation 210 d'un véhicule 200 automobile (figure 2), est basée sur l'obtention et l'analyse d'images de ce vitrage d'observation 210 par le dispositif de détection 100. Ces amas de matière sont par exemple des gouttes d'eau, de petits amas de neige, de givre ou de buée, ou encore des salissures comme des éclaboussures de boue, présents sur le vitrage d'observation 210.

Ici, ce dispositif de détection 100 est également adapté à obtenir au moins une image d'un environnement extérieur E du véhicule 200.

Le dispositif de détection 100 comprend notamment :
- un capteur d'images 130,
- un système optique 110 associé optiquement au capteur d'images 130, comportant des moyens de mise au point commandables (non représentés),
- un module de commande 120 adapté notamment à commander les moyens de mise au point commandables, et
- un module d'analyse 126 conçu notamment pour analyser des images obtenues au moyen du capteur d'images 130.

Plus particulièrement, le dispositif de détection 100 comprend ici une caméra vidéo intégrant le capteur d'images 130 et le système optique 110, à laquelle sont adjoints le module de commande 120 et le module d'analyse 126.

Le capteur d'images 130 est ici un capteur d'image bidimensionnelle, par exemple un capteur d'images CCD (acronyme anglo-saxon de « Charge-Coupled Device », c'est à dire dispositif à transfert de charge) ou CMOS (acronyme anglo-saxon de « Complementary Metal-Oxide Semiconductor », c'est-à-dire semiconducteur à oxyde de métal complémentaire).

Le système optique 110 est ici un objectif d'imagerie, dont les moyens de mise au point commandables comportent une lentille liquide, c'est-à-dire une lentille déformable contenant un fluide, dont la focale est commandable. Ce système optique 110 permet de former sur le capteur d'image 130 une image d'objets lui faisant face.

La valeur de la focale f de la lentille liquide peut être commandée par un signal électrique Vf, par exemple une tension appliquée entre deux électrodes de la lentille liquide.

En variante, les moyens de mise au point commandables comportent des moyens de déplacement, permettant de déplacer une lentille du système optique par rapport au capteur d'images, au lieu d'une telle lentille liquide. Ces moyens de déplacement peuvent par exemple comprendre un système électromécanique, ou un actionneur piézo-électrique.

Les moyens de mise au point commandables peuvent aussi comporter de manière combinée une lentille liquide de focale commandable ainsi et de tels moyens de déplacement.

Le système optique 110 est centré ici sur un axe optique Z ; l'origine N de cet axe optique Z est prise au niveau d'une face frontale 112 du système optique 110.

Le module de commande 120 du dispositif de détection 100 comprend ici:
- un processeur 121 effectuant des opérations logiques, par exemple un microprocesseur,
- un module de mémorisation 122, avec lequel le processeur 121 peut échanger des données,
- le module d'analyse précité 126, comprenant ici le processeur 121 et le module de mémorisation 122, et
- un module de conditionnement 123, par exemple un convertisseur numérique-analogique suivi d'un amplificateur de tension, qui permet de convertir une commande donnée par le processeur 121 sous forme numérique en un signal adapté à commander les moyens de mise au point commandables, c'est-à-dire ici le signal électrique Vf adapté à commander la lentille liquide.

Le processeur 121 est adapté à commander le capteur d'images 130, pour que ce dernier acquière des données représentatives d'une image formée sur ce capteur, et est adapté à recevoir du capteur d'images 130 lesdites données.

Le processeur 121 est également adapté à commander les moyens de mise au point commandables, par l'intermédiaire du module de conditionnement 123.

De manière optionnelle, le processeur 121 est adapté à recevoir des signaux d'entrée supplémentaires (non représentés), provenant de capteurs ou dispositifs équipant le véhicule 200, relatifs au fonctionnement du véhicule automobile ou à son environnement routier.

Le dispositif de détection 100 est adapté à générer un signal de sortie 102, en fonction notamment des données représentatives d'images obtenues grâce au système optique 110 et au capteur d'images 130.

Ce signal de sortie 102 comprend notamment :
- un signal représentatif de la détection d'amas de matière sur le vitrage d'observation 210 du véhicule, et
- des données représentatives d'au moins une image de l'environnement extérieur E du véhicule, et/ou des données obtenues par analyse d'au moins une image de cet environnement extérieur E.

Ce signal de sortie 102 peut aussi comprendre des données brutes directement représentatives des images du vitrage d'observation 210 obtenues par le dispositif de détection 100.

Ici, ce signal de sortie comprend aussi au moins un signal de commande adapté à déclencher une fonctionnalité commandable du véhicule 200, comme cela est détaillé plus loin.

Le dispositif de détection 100 est situé dans l'habitacle du véhicule 200 automobile qu'il équipe. Il comprend des moyens de montage (non représentés) par lesquels il est fixé dans cet habitacle.

Comme représenté en figure 2, le vitrage d'observation 210 du véhicule 200 sépare l'habitacle de ce véhicule 200 de l'environnement extérieur E à celui-ci.

Le dispositif de détection 100 est donc peu éloigné du vitrage d'observation 210 ; la distance entre la face frontale 112 du système optique 110 et le vitrage d'observation est typiquement inférieure à deux mètres, et est préférentiellement inférieure à 10 centimètres.

Le système optique 110 du dispositif de détection 100 est orienté vers l'extérieur du véhicule 200, de manière à ce que le dispositif de détection 100 puisse visualiser une partie de cet environnement extérieur E, à travers le vitrage d'observation 210.

Plus précisément, l'axe optique Z du système optique 110 du dispositif de détection 100 est orienté ici vers l'avant du véhicule 200, et ledit vitrage d'observation 210 comprend ici le pare-brise du véhicule 200.

Le champ de vision CV du dispositif de détection 100, repéré en pointillés sur les figures 1 et 2, correspond au champ de vision du système optique 110 muni du capteur d'images 130.

Le champ de vision CV du dispositif de détection 100 couvre ici une partie du pare-brise de ce véhicule, ainsi qu'une portion de route faisant face au véhicule 200 automobile.

Le dispositif de détection 100 peut ainsi assurer, en plus de ses fonctions de détection d'un amas de matière sur le vitrage d'observation 210, détaillées plus loin, le rôle de caméra d'observation de l'environnement extérieur E du véhicule.

En variante, le système optique du dispositif de détection est orienté dans une autre direction, par exemple, vers l'arrière du véhicule, le vitrage d'observation étant alors la lunette arrière de ce véhicule.

Le signal de sortie 102 du dispositif de détection 100 est transmis ici à différents organes du véhicule 200, de manière à pouvoir déclencher des fonctionnalités commandables de ce véhicule.

Il est notamment transmis à des moyens d'élimination 230 d'amas de matière présents sur le vitrage d'observation 210, et à des moyens de signalisation 240 de la présence d'amas de matière sur le vitrage d'observation 210.

Les moyens d'élimination 230 d'amas de matière présents sur le vitrage d'observation 210 peuvent comprendre notamment :
- des essuie-glaces motorisés, et/ou
- un système de dégivrage et/ou de désembuage du vitrage d'observation 210, par exemple au moyen de fils chauffants inclus dans ou sur ce vitrage, ou au moyen d'une ventilation adaptée de ce vitrage, et/ou
- un système de projection d'un liquide nettoyant sur le vitrage d'observation 210.

Les moyens de signalisation 240 de la présence d'amas de matière sur le vitrage d'observation 210 comprennent par exemple un dispositif lumineux, un dispositif d'affichage tel qu'un écran, ou encore un dispositif d'émission d'un signal sonore, de manière à avertir un conducteur du véhicule 200 de la présence d'amas de matière, par exemple de gouttes d'eau, sur le vitrage d'observation 210.

Le signal de sortie 102 du dispositif de détection 100 comprend un signal de commande adapté à piloter ces moyens d'élimination 230, et un signal d'avertissement transmis à ces moyens de signalisation 240.

Ici, le signal de sortie 102 du dispositif de détection 100 est aussi transmis à une unité centrale d'aide à la conduite 220 équipant le véhicule 200, assurant d'autres fonctions d'aide à la conduite, telles qu'une détection de marquages au sol, de panneaux routiers, ou d'obstacles, faisant ici face au véhicule 200 automobile. Cette unité centrale d'aide à la conduite 220 peut aussi assurer le déclenchement d'autres fonctionnalités commandables du véhicule, comme des fonctions de régulation de vitesse, ou de direction assistée, ou de gestion de systèmes d'éclairage du véhicule 200.

Ici, le dispositif de détection 100 et l'unité centrale d'aide à la conduite 220 sont distincts.

En variante, le module de commande et le module d'analyse du dispositif de détection sont intégrés dans l'unité centrale d'aide à la conduite.

Par ailleurs, le signal de sortie du dispositif de détection peut aussi être transmis directement à des moyens d'actionnement du véhicule, par exemple à un dispositif de freinage d'urgence.

Le réglage de mise au point du système optique 100 du dispositif de détection 100, piloté par son module de commande 120, est particulièrement important pour obtenir des images adaptées à la détection d'amas de matière sur le vitrage d'observation 210 du véhicule.

On dénomme points sources les points qui forment les différents objets présents dans le champ de vision CV du dispositif de détection 100, et qui sont visibles du capteur d'images 130.

Ici, la distance entre un tel point-source et le dispositif 100 est assimilée à la cote z repérant ce point-source le long de l'axe optique Z du système optique 110.

Pour une valeur donnée de la focale f de la lentille liquide, une zone déterminée du champ de vision CV du dispositif de détection 100, dite zone de netteté, associée à cette valeur de la focale f, est visualisée de manière nette par ce dernier.

Plus précisément, un point quelconque situé dans cette zone de netteté donne alors, par le système optique 110, une image nette, sensiblement ponctuelle, sur le capteur d'images 130. Au contraire, un point source quelconque situé en dehors de cette zone de netteté donne alors une image floue, diffuse et étendue sur le capteur d'image 130.

Cette zone de netteté est positionnée autour d'une cote moyenne z_{N}[f], associée ici à la valeur correspondante de la focale f de la lentille liquide. L'extension de cette zone de netteté selon l'axe optique correspond à la profondeur de champ PoC[f] du système optique 110 (associé au capteur d'images 130).

Autrement formulé, un point source quelconque situé dans cette zone de netteté, comprise entre les cotes z_{N}[f] - (PoC[f]/2) et z_{N}[f] + (PoC[f]/2) donne, par le système optique 110, une image nette, sensiblement ponctuelle, sur le capteur d'images 130.

La profondeur de champ PoC[f] du système optique 110 présente une valeur réduite lorsque la zone de netteté est proche du dispositif de détection. A titre d'exemple, cette profondeur de champ peut être inférieure à 10 centimètres lorsque la zone de netteté est située à moins de 50 centimètres de la face frontale 112 du système optique 110.

La mise au point sur une zone de netteté positionnée autour d'une cote moyenne z_{N}[f] donnée est réalisée ici en commandant la focale f de la lentille liquide à la valeur associée à cette cote moyenne z_{N}[f].

Trois zone de netteté distinctes ZOE, ZO1 et ZO2, positionnées respectivement autour de trois cotes moyennes différentes zE, z1 et z2, sont représentées schématiquement figure 2. Ces trois cotes moyennes zE, z1 et z2 sont associées ici respectivement à trois valeurs distinctes de la focale f de la lentille liquide.

Le module de commande 120 du dispositif de détection 100 est conçu pour commander les moyens de mise au point de manière à former sur le capteur d'images 130 une image nette d'une première zone ZV1 du vitrage d'observation 210, et pour déclencher une prise de vue de manière à obtenir une première image IM1 du vitrage d'observation correspondante,

De manière remarquable, le module de commande 120 du dispositif de détection 100 est conçu également pour commander les moyens de mise au point, de manière à former sur le capteur d'images 130 une image nette d'une deuxième zone ZV2 du vitrage d'observation 210, plus proche du système optique 110 que ladite première zone ZV1 du vitrage d'observation 210, et pour déclencher une prise de vue de manière à obtenir une deuxième image IM2 du vitrage d'observation correspondante.

Comme le vitrage d'observation 210 est proche du système optique 110 du dispositif de détection, la profondeur de champ PoC[f] correspondant à ces première et deuxième images du vitrage est réduite.

Par ailleurs, ce vitrage d'observation 210 est incliné par rapport à l'axe optique Z du système optique 110. Autrement formulé, il n'est pas complètement perpendiculaire à l'axe optique Z.

En conséquence, une partie seulement du vitrage d'observation 210 est contenue dans la zone de netteté ZO1 du système optique, lors de l'obtention de la première image du vitrage IM1. Cette partie du vitrage d'observation 210 correspond à la première zone du vitrage ZV1 visualisées de manière nette.

De la même manière, une partie seulement du vitrage d'observation 210, correspondant à la deuxième zone du vitrage ZV2 visualisées de manière nette, est contenue dans la zone de netteté ZO2 du système optique, lors de l'obtention de la deuxième image du vitrage IM2.

Dans l'une de ces première ou deuxième images du vitrage IM1, IM2, la première, ou la deuxième zones du vitrage ZV1, ZV2, visualisée de manière nette ne couvre ainsi qu'une partie du vitrage d'observation 210.

Il est donc particulièrement intéressant, comme c'est le cas ici, que le module de commande pilote les moyens de mise au point et le capteur d'image 130, de manière à obtenir ces première et deuxième images du vitrage IM1, IM2, car la combinaison des première et deuxième zones du vitrage ZV1, ZV2 visualisées de manière nette couvre alors une partie du vitrage d'observation 210 avantageusement plus grande que lorsqu'une seule image du vitrage est utilisée.

La partie du vitrage sur laquelle un, ou plusieurs amas de matière peuvent être détectés est ainsi avantageusement plus grande que lorsqu'une seule image du vitrage est utilisée, ce qui améliore l'efficacité et la sensibilité de détection du dispositif.

Par ailleurs, le vitrage d'observation peut être éclaboussé, ou sali, sur une partie seulement, par exemple sur une partie comprenant la première, ou la deuxième zone du vitrage ZV1, ZV2 seulement. Grâce à l'obtention de ces première et deuxième images du vitrage IM1, IM2, cette éclaboussure, ou cette salissure, est détectée par le dispositif, ce qui ne serait pas le cas si une seule image du vitrage avait été obtenue puis analysée par le dispositif de détection 100.

Le module de commande est conçu aussi, ici, pour commander les moyens de mise au point de manière à former sur le capteur d'images 130 une image nette d'une zone d'un environnement extérieur ZOE du véhicule distante du véhicule 200, et pour déclencher une prise de vue de manière à obtenir une image IME correspondante de cet environnement extérieur.

Ici, le module d'analyse 126 du dispositif de détection 100 est conçu aussi pour remplir des fonctions d'aide à la conduite, basées sur une analyse de ladite image IME de l'environnement extérieur E du véhicule automobile obtenue par le dispositif de détection 100. Ces fonctions d'aide à la conduite peuvent par exemple comprendre des fonctions, déjà mentionnées, de détection de marquages au sol, de panneaux routiers, d'obstacles, ou d'autres véhicules, faisant ici face au véhicule 200 automobile, ainsi que le déclenchement de fonctionnalités commandables du véhicule, en fonction notamment de ces détections.

La détection d'un ou de plusieurs amas de matière sur le vitrage d'observation 210 du véhicule est réalisée ici en mettant en œuvre le procédé représenté schématiquement figure 3, dans le dispositif de détection 100 décrit ci-dessus.

Au cours d'une première étape E1 de ce procédé, le module de commande 120 :
- commande les moyens de mise au point du système optique 110 pour faire la mise au point sur une zone ZOE de l'environnement extérieur E du véhicule, distante du véhicule 200, ou pour faire successivement la mise au point sur différentes zones de l'environnement extérieur E du véhicule, et
- déclenche une série de prises de vues PVE de l'environnement extérieur, de manière à obtenir une série d'images correspondantes, telles que l'image IME mentionnée précédemment, par exemple.

Le module de commande 120 déclenche cette série de prises de vues PVE de l'environnement extérieur de manière à ce qu'elle soit réalisée en une durée TE déterminée. Cette durée est déterminée par la valeur d'une variable VTE, enregistrées dans les moyens de mémorisation 122. Cette variable VTE présente une valeur par défaut, par exemple égale 2 secondes . Sa valeur peut être adaptée au cours du procédé (à l'étape E6), comme décrit plus loin.

Ici, des données représentatives des images obtenues au cours de cette étapes sont transmises, par l'intermédiaire du signal de sortie 102 du dispositif de détection 100, à l'unité centrale d'aide à la conduite 220.

Toujours au cours de cette étape E1, le module d'analyse 126 peut aussi analyser ces images de l'environnement extérieur E du véhicule, aux fins d'aide à la conduite mentionnées précédemment, et transmettre le résultat de cette analyse à l'unité centrale d'aide à la conduite 220.

Au cours de l'étape suivante E2, le module de commande 120 commande les moyens de mise au point du système optique 110, de manière à faire la mise au point, à des instants successifs, sur des zones ZV1, ZV2, ... ZVN au moins partiellement distinctes du vitrage d'observation 210, et pour déclencher une prise de vue à chacun desdits instants, de manière à obtenir, par cette série de prises de vues PV une série d'images IM1, IM2, ..., IMN respectives du vitrage d'observation 210.

Plusieurs zones ZV1, ZV2, ... ZVN au moins partiellement distinctes du vitrage d'observation sont ainsi visualisées de manière nette par le dispositif de détection 110. La combinaison de ces zones ZV1, ZV2, ... ZVN visualisées de manière nette couvre alors une partie du vitrage d'observation 210 particulièrement grande, ce qui rend la détection ultérieure d'amas de matière sur ce vitrage plus efficace, comme cela a déjà été expliqué.

Le module de commande 120 déclenche cette série de prises de vues PV du vitrage d'observation de manière à obtenir un nombre N déterminé d'images IM1, IM2, ..., IMN, en une durée TV déterminée. Ce nombre N d'images et cette durée TV sont déterminés respectivement par la valeur d'une variable VN, et d'une variable VTV, enregistrées dans les moyens de mémorisation 122. Ces variables présentent chacune une valeur par défaut, par exemple VN=2 et VTV=0,1 seconde. Ces valeurs peuvent être adaptées au cours du procédé (à l'étape E6), comme décrit plus loin.

Préférentiellement, le module de commande 120 commande les moyens de mise au point de manière à ce que la durée TV de cette série de prises de vues PV du vitrage d'observation soit plus courte que (voire, comme ici, inférieure au dixième de) la durée TE de la série de prises de vues PVE de l'environnement extérieur E du véhicule réalisée à l'étape E1 précédente.

Le dispositif de détection est alors disponible presque en permanence pour l'observation de l'environnement extérieur E du véhicule et les fonctions d'aide à la conduite associées, ce qui est particulièrement intéressant.

Au cours de l'étape suivante E3, le module d'analyse 126 analyse la série d'images IM1, IM2, ..., IMN du vitrage d'observation obtenue à l'étape E2, de manière à détecter un ou plusieurs amas de matière sur ce vitrage d'observation 210.

L'analyse de cette série d'images IM1, IM2, ..., IMN peut être réalisée par exemple par détection, dans chacune de ces images, d'une partie d'image présentant un gradient de valeur élevée. En effet, lorsqu'un amas de matière est présent sur le vitrage d'observation, cet amas est visualisé de manière nette dans l'une des images de cette série, qui présente alors, au niveau de l'image de cet amas, un gradient de valeur élevé. Au contraire, en l'absence d'amas de matière sur ce vitrage d'observation, comme celui-ci est transparent, ces images ne comportent pas d'éléments nets, et donc ne comportent pas de zone présentant un gradient de valeur élevée.

En variante, l'analyse de cette série d'images IM1, IM2, ..., IMN peut être réalisée par détection de composantes correspondant à des fréquences spatiales élevées, par reconnaissance de forme, ou encore par une méthode basé un réseau de neurones artificiel.

Au cours de l'étape suivante E4, le module d'analyse 126 détermine si un amas de matière a été détecté sur le vitrage d'observation lors de l'étape E3 précédente.

Lorsqu'un tel amas de matière n'a pas été détecté à l'étape E3, le procédé se poursuit par une étape E7 au cours de laquelle le module de commande attribue à chacune des variables VN, VTV et VTE sa valeur par défaut. Par exemple VN=2, VTV=0,1 seconde et VTE = 2 secondes.

Au terme de cette étape E7, le procédé se poursuit par l'étape E1 décrite ci-dessus.

Lors de l'exécution ultérieure des étapes E1 et E3, les valeurs par défaut des variables VN, VTV et VTE sont alors utilisées par le module de commande 120 pour réaliser les séries de prises de vues de l'environnement extérieur E, et du vitrage d'observation 210.

Au contraire, lorsqu'un amas de matière a été détecté sur le vitrage d'observation lors de l'étape E3, le procédé se poursuit par l'étape E5, au cours de laquelle le module de commande 120 pilote, par l'intermédiaire de son signal de sortie 102 :
- les moyens d'élimination 230, de manière à éliminer le ou les amas détectés du vitrage d'observation, et
- les moyens de signalisation 240, de manière à avertir le conducteur du véhicule 200 de la détection de ces amas, en particulier lorsque le module d'analyse 126 a déterminé, à l'étape E3, que ces amas correspondent à des gouttes d'eau.

En effet, la présence de gouttes d'eau sur le vitrage d'observation peut être causée par une averse, nécessitant, du point de vue du conducteur, d'adapter la vitesse qu'il impose au véhicule.

Au cours de cette étape E5, le module de commande 120 peut aussi, de manière optionnelle, transmettre à l'unité centrale d'aide à la conduite 220, le résultat de l'analyse des images du vitrage d'observation réalisée à l'étape E3, ou des données représentatives de ces images.

Au cours de l'étape suivante E6, le module de commande 120 attribue à chacune des variables VN, VTV et VTE une valeur modifiée, de manière à :
- réduire la durée séparant la série de prises de vues PV précédente du vitrage d'observation 210 (à l'étape précédente E2) et la série de prises de vues PV suivante de ce vitrage d'observation 210 (lorsque l'étape E2 est à nouveau exécutée), et à
- augmenter le nombre N d'images qui seront obtenues lors de cette série de prises de vues PV suivante du vitrage d'observation,

Cette réduction de la durée séparant deux séries de prises de vues PV successives du vitrage d'observation, ainsi que cette augmentation du nombre N d'images obtenues lors d'une telle série permettent d'augmenter la sensibilité de détection d'amas de matière présents sur le vitrage d'observation.

Augmenter ainsi cette sensibilité de détection lorsqu'un amas a été précédemment détecté, est particulièrement intéressant. En effet, cela permet de répartir au mieux les ressources du dispositif de détection 100 (en particulier la durée pendant laquelle il est disponible pour obtenir un type d'image donné), entre ses fonctions de détection d'amas de matière sur le vitrage d'observation, et ses fonctions d'observation de l'environnement extérieur E du véhicule.

A titre d'illustration, les valeurs des variables VN, VTV et VTE peuvent être modifiées comme suit au cours de cette étape E6 : VN=4, VTV=0,2 seconde et VTE = 1 seconde.

Au terme de cette étape E6, le procédé se poursuit par l'étape E1 décrite ci-dessus.

Lors de l'exécution ultérieure des étapes E1 et E3, les valeurs modifiées des variables VN, VTV et VTE sont utilisées par le module de commande 120 pour réaliser les séries de prises de vues de l'environnement extérieur E, et du vitrage d'observation 210.

## Revendications

1. Dispositif de détection (100) adapté à être installé dans un habitacle de véhicule (200) automobile délimité par un vitrage d'observation (210), comprenant :
- un capteur d'images (130),
- un système optique (110), associé optiquement au capteur d'images (130) et comportant des moyens de mise au point commandables, et
- un module de commande (120) conçu pour commander les moyens de mise au point de manière à former sur le capteur d'images (130) une image nette d'une première zone (ZV1) du vitrage d'observation, et pour déclencher une prise de vue de manière à obtenir une première image (IM1) du vitrage d'observation correspondante,
le module de commande étant conçu en outre pour commander les moyens de mise au point de manière à former sur le capteur d'images (130) une image nette d'une deuxième zone (ZV2) du vitrage d'observation, plus proche du système optique (110) que ladite première zone (ZV1) du vitrage d'observation, et pour déclencher une prise de vue de manière à obtenir une deuxième image du vitrage (IM2) d'observation correspondante,
le dispositif de détection (100) comprenant en outre un module d'analyse (126) conçu pour détecter un amas de matière situé sur le vitrage d'observation (210), par analyse desdites première et deuxième images (IM1, IM2) du vitrage d'observation, dans lequel le module de commande (120) est conçu pour :
- commander les moyens de mise au point, de manière à faire la mise au point, à des instants successifs, sur des zones (ZV1, ZV2, ..., ZVN) au moins partiellement distinctes du vitrage d'observation (210), et pour déclencher une prise de vue à chacun desdits instants, de manière à obtenir, par cette série de prises de vues (PV) du vitrage d'observation, une série d'images (IM1, IM2, ..., IMN) respectives du vitrage d'observation, puis pour
- commander les moyens de mise au point de manière à faire la mise au point sur une zone (ZOE) au moins de l'environnement extérieur (E) du véhicule, et pour déclencher une série de prises de vues (PVE) de l'environnement extérieur de manière à obtenir une série d'images correspondantes de l'environnement extérieur,
le dispositif de détection **caractérisé en ce que** le module de commande (120) est en outre conçu pour :
- augmenter le nombre d'images (N) obtenues lors d'une série de prises de vues (PV) du vitrage d'observation, lorsque le module d'analyse (126) détecte un amas de matière situé sur le vitrage d'observation (210).

2. Dispositif selon la revendication 1, dans lequel le module de commande (120) est conçu en outre pour commander les moyens de mise au point de manière à former sur le capteur d'images (130) une image nette d'une zone (ZOE) d'un environnement extérieur (E) du véhicule (200), distante du véhicule (200), et pour déclencher une prise de vue de manière à obtenir une image (IME) correspondante de cet environnement extérieur (E).

3. Dispositif selon la revendication 1, dans lequel le module de commande (120) est conçu pour que la durée (TV) de la série de prises de vues (PV) du vitrage d'observation (210) soit inférieure à la durée de la série de prises de vues (PVE) de l'environnement extérieur (E).

4. Dispositif selon l'une des revendications 1 et 3, dans lequel le module de commande (120) est conçu pour commander de manière réitérée la séquence d'opérations comprenant :
- le déclenchement de la série de prises de vues (PV) du vitrage d'observation, puis
- le déclenchement de la série de prises de vues (PE) de l'environnement extérieur (E).

5. Dispositif selon la revendication 4, dans lequel le module de commande (120) est conçu pour réduire la durée séparant deux séries de prises de vues (PV) du vitrage d'observation successives lorsque le module d'analyse (126) détecte un amas de matière situé sur le vitrage d'observation (210).

6. Dispositif selon l'une des revendications 1 à 5, dans lequel le module de commande (120) est adapté à commander des moyens d'élimination d'un amas de matière situé sur le vitrage d'observation, lorsque le module d'analyse (126) détecte un amas de matière situé sur le vitrage d'observation (210).

7. Dispositif selon l'une des revendications 1 à 6, dans lequel le module de commande (120) est adapté à commander des moyens de signalisation de la présence d'un amas de matière sur le vitrage d'observation, lorsque le module d'analyse (126) détecte un amas de matière situé sur le vitrage d'observation (210).

8. Dispositif selon l'une des revendications 1 à 7, dans lequel les moyens de mise au point commandables comprennent une lentille liquide de focale (f) commandable.

9. Dispositif selon l'une des revendications 1 à 8, dans lequel ledit vitrage d'observation (210) comprend un pare-brise du véhicule (200) automobile.

10. Dispositif selon l'une des revendications 1 à 9, dans lequel ledit amas de matière comprend une goutte d'eau.

11. Véhicule (200) automobile comprenant un habitacle délimité par un vitrage d'observation (210), équipé d'un dispositif de détection (100) selon l'une des revendications 1 à 10.

12. Procédé de détection comprenant des étapes de :
- commande de moyens de mise au point d'un système optique (110), de manière à former sur un capteur d'images (130) une image nette d'une première zone (ZV1) d'un vitrage d'observation (210) délimitant un habitacle de véhicule (200) automobile,
- déclenchement d'une prise de vue de manière à obtenir une première image (IM1) du vitrage d'observation correspondante,
- commande desdits moyens de mise au point de manière à former sur le capteur d'images (130) une image nette d'une deuxième zone (ZV2) du vitrage d'observation, plus proche du système optique (110) que ladite première zone (ZV1) du vitrage d'observation,
- déclenchement d'une prise de vue de manière à obtenir une deuxième image du vitrage (IM2) d'observation correspondante, et de
- détection par un dispositif (100) d'un amas de matière situé sur le vitrage d'observation (210), par analyse desdites première et deuxième images (IM1, IM2) du vitrage d'observation
- commande desdits moyens de mise au point, de manière à faire la mise au point, à des instants successifs, sur des zones (ZV1, ZV2, ..., ZVN) au moins partiellement distinctes du vitrage d'observation (210), et pour déclencher une prise de vue à chacun desdits instants, de manière à obtenir, par cette série de prises de vues (PV) du vitrage d'observation, une série d'images (IM1, IM2, ..., IMN) respectives du vitrage d'observation,
- commande desdits moyens de mise au point de manière à faire la mise au point sur une zone (ZOE) au moins de l'environnement extérieur (E) du véhicule, et pour déclencher une série de prises de vues (PVE) de l'environnement extérieur de manière à obtenir une série d'images correspondantes de l'environnement extérieur,
**caractérisé en ce qu'**il comprend en outre l'étape suivante :
- augmentation du nombre d'images (N) obtenues lors d'une série de prises de vues (PV) du vitrage d'observation, lorsque le module d'analyse (126) détecte un amas de matière situé sur le vitrage d'observation (210).

## Patentansprüche

1. Detektionsvorrichtung (100), die dazu angepasst ist, in einen Innenraum eines Kraftfahrzeugs (200) eingebaut zu werden, der durch eine Sichtverglasung (210) begrenzt wird, umfassend:
- einen Bildsensor (130),
- ein optisches System (110), das dem Bildsensor (130) optisch zugeordnet ist und steuerbare Fokussierungsmittel umfasst, und
- ein Steuermodul (120), das dazu ausgebildet ist, die Fokussierungsmittel so zu steuern, dass auf dem Bildsensor (130) ein scharfes Bild eines ersten Bereichs (ZV1) der Sichtverglasung gebildet wird, und eine Aufnahme auszulösen, so dass ein entsprechendes erstes Bild (IM1) der Sichtverglasung erhalten wird,
wobei das Steuermodul ferner dazu ausgebildet ist, die Fokussierungsmittel so zu steuern, dass auf dem Bildsensor (130) ein scharfes Bild eines zweiten Bereichs (ZV2) der Sichtverglasung, der dem optischen System (110) näher als der erste Bereich (ZV1) der Sichtverglasung ist, gebildet wird, und eine Aufnahme auszulösen, so dass ein entsprechendes zweites Bild (IM2) der Sichtverglasung erhalten wird,
wobei die Detektionsvorrichtung (100) ferner ein Analysemodul (126) umfasst, das dazu ausgebildet ist, eine auf der Sichtverglasung (210) gelegene Stoffansammlung durch Analyse der ersten und zweiten Bilder (IM1, IM2) der Sichtverglasung zu detektieren, und wobei das Steuermodul (120) dazu ausgebildet ist:
- die Fokussierungsmittel so zu steuern, dass die Fokussierung, zu aufeinander folgenden Zeitpunkten, auf mindestens teilweise unterschiedliche Bereiche (ZV1, ZV2, ..., ZVN) der Sichtverglasung (210) erfolgt, und eine Aufnahme zu jedem der Zeitpunkte auszulösen, so dass, durch diese Serie von Aufnahmen (PV) der Sichtverglasung, eine Serie von jeweiligen Bildern (IM1, IM2, ..., IMN) der Sichtverglasung erhalten wird, dann
- die Fokussierungsmittel so zu steuern, dass die Fokussierung auf mindestens einen Bereich (ZOE) der Außenumgebung (E) des Fahrzeugs erfolgt, und eine Serie von Aufnahmen (PVE) der Außenumgebung auszulösen, so dass eine Serie von entsprechenden Bildern der Außenumgebung erhalten wird,
wobei die Detektionsvorrichtung **dadurch gekennzeichnet ist, dass** das Steuermodul (120) ferner dazu ausgebildet ist:
- die Anzahl von Bildern (N), die bei einer Serie von Aufnahmen (PV) der Sichtverglasung erhalten werden, zu erhöhen, wenn das Analysemodul (126) eine auf der Sichtverglasung (210) gelegene Stoffansammlung detektiert.

2. Vorrichtung nach Anspruch 1, wobei das Steuermodul (120) ferner dazu ausgebildet ist, die Fokussierungsmittel so zu steuern, dass auf dem Bildsensor (130) ein scharfes Bild eines Bereichs (ZOE) einer Außenumgebung (E) des Fahrzeugs (200), die von dem Fahrzeug (200) entfernt ist, gebildet wird, und eine Aufnahme auszulösen, so dass ein entsprechendes Bild (IME) dieser Außenumgebung (E) erhalten wird.

3. Vorrichtung nach Anspruch 1, wobei das Steuermodul (120) dazu ausgebildet ist, dass die Dauer (TV) der Serie von Aufnahmen (PV) der Sichtverglasung (210) kürzer als die Dauer der Serie von Aufnahmen (PVE) der Außenumgebung (E) ist.

4. Vorrichtung nach einem der Ansprüche 1 und 3, wobei das Steuermodul (120) zum wiederholten Steuern der Vorgangsabfolge ausgebildet ist, die umfasst:
- das Auslösen der Serie von Aufnahmen (PV) der Sichtverglasung, dann
- das Auslösen der Serie von Aufnahmen (PE) der Außenumgebung (E).

5. Vorrichtung nach Anspruch 4, wobei das Steuermodul (120) dazu ausgebildet ist, die Dauer, die zwei aufeinander folgende Serien von Aufnahmen (PV) der Sichtverglasung trennt, zu verringern, wenn das Analysemodul (126) eine auf der Sichtverglasung (210) gelegene Stoffansammlung detektiert.

6. Vorrichtung nach einem der Ansprüche 1 bis 5, wobei das Steuermodul (120) dazu angepasst ist, Mittel zum Entfernen einer auf der Sichtverglasung gelegenen Stoffansammlung zu steuern, wenn das Analysemodul (126) eine auf der Sichtverglasung (210) gelegene Stoffansammlung detektiert.

7. Vorrichtung nach einem der Ansprüche 1 bis 6, wobei das Steuermodul (120) dazu angepasst ist, Mittel zur Signalisierung des Vorhandenseins einer Stoffansammlung auf der Sichtverglasung zu steuern, wenn das Analysemodul (126) eine auf der Sichtverglasung (210) gelegene Stoffansammlung detektiert.

8. Vorrichtung nach einem der Ansprüche 1 bis 7, wobei die steuerbaren Fokussierungsmittel eine Flüssigkeitslinse mit steuerbarer Brennweite (f) umfassen.

9. Vorrichtung nach einem der Ansprüche 1 bis 8, wobei die Sichtverglasung (210) eine Windschutzscheibe des Kraftfahrzeugs (200) umfasst.

10. Vorrichtung nach einem der Ansprüche 1 bis 9, wobei die Stoffansammlung einen Wassertropfen umfasst.

11. Kraftfahrzeug (200), das einen durch eine Sichtverglasung (210) begrenzten Innenraum umfasst, der mit einer Detektionsvorrichtung (100) nach einem der Ansprüche 1 bis 10 ausgestattet ist.

12. Detektionsverfahren, umfassend die folgenden Schritte:
- Steuern von Fokussierungsmitteln eines optischen Systems (110), so dass auf einem Bildsensor (130) ein scharfes Bild eines ersten Bereichs (ZV1) einer Sichtverglasung (210) gebildet wird, die einen Innenraum eines Kraftfahrzeugs (200) begrenzt,
- Auslösen einer Aufnahme, so dass ein entsprechendes erstes Bild (IM1) der Sichtverglasung erhalten wird,
- Steuern der Fokussierungsmittel, so dass auf dem Bildsensor (130) ein scharfes Bild eines zweiten Bereichs (ZV2) der Sichtverglasung, der dem optischen System (110) näher als der erste Bereich (ZV1) der Sichtverglasung ist, erhalten wird,
- Auslösen einer Aufnahme, so dass ein entsprechendes zweites Bild (IM2) der Sichtverglasung erhalten wird, und
- Detektion durch eine Vorrichtung (100) einer auf der Sichtverglasung (210) gelegenen Stoffansammlung durch Analyse der ersten und zweiten Bilder (IM1, IM2) der Sichtverglasung
- Steuern der Fokussierungsmittel, so dass die Fokussierung, zu aufeinander folgenden Zeitpunkten, auf mindestens teilweise unterschiedliche Bereiche (ZV1, ZV2, ..., ZVN) der Sichtverglasung (210) erfolgt, und eine Aufnahme zu jedem der Zeitpunkte auszulösen, so dass, durch diese Serie von Aufnahmen (PV) der Sichtverglasung, eine Serie von jeweiligen Bildern (IM1, IM2, ..., IMN) der Sichtverglasung erhalten wird,
- Steuern der Fokussierungsmittel, so dass die Fokussierung auf mindestens einen Bereich (ZOE) der Außenumgebung (E) des Fahrzeugs erfolgt, und eine Serie von Aufnahmen (PVE) der Außenumgebung auszulösen, so dass eine Serie von entsprechenden Bildern der Außenumgebung erhalten wird,
**dadurch gekennzeichnet, dass** es ferner den folgenden Schritt umfasst:
- Erhöhen der Anzahl von Bildern (N), die bei einer Serie von Aufnahmen (PV) der Sichtverglasung erhalten werden, wenn das Analysemodul (126) eine auf der Sichtverglasung (210) gelegene Stoffansammlung detektiert.

## Claims

1. Detection device (100) that is suitable for being installed in a passenger compartment of an automotive vehicle (200) that is delimited by an observation window (210), comprising:
- an image sensor (130);
- an optical system (110), optically associated with the image sensor (130) and including controllable focusing means; and
- a control module (120) that is designed to control the focusing means so as to form, on the image sensor (130), a sharp image of a first area (ZV1) of the observation window, and to trigger the capture of a shot so as to obtain a first corresponding image (IM1) of the observation window,
the control module further being designed to control the focusing means so as to form, on the image sensor (130), a sharp image of a second area (ZV2) of the observation window, closer to the optical system (110) than said first area (ZV1) of the observation window, and to trigger the capture of a shot so as to obtain a second corresponding image (IM2) of the observation window,
the detection device (100) further comprising an analysis module (126) that is designed to detect an accumulation of matter located on the observation window (210), by analysing said first and second images (IM1, IM2) of the observation window, in which the control module (120) is designed to:
- control the focusing means, so as to focus, at successive instants in time, on areas (ZV1, ZV2, ..., ZVN) of the observation window (210) that are at least partially distinct, and to trigger the capture of a shot at each of said instants in time, so as to obtain, by means of this series of shots (PV) of the observation window, a series of respective images (IM1, IM2, ..., IMN) of the observation window; then to
- control the focusing means so as to focus on one area (ZOE) at least of the environment (E) outside the vehicle, and to trigger the capture of a series of shots (PVE) of the outside environment so as to obtain a series of corresponding images of the outside environment,
the detection device being **characterized in that** the control module (120) is further designed to:
- increase the number (N) of images that are obtained in a series of shots (PV) of the observation window, when the analysis module (126) detects an accumulation of matter located on the observation window (210).

2. Device according to Claim 1, wherein the control module (120) is further designed to control the focusing means so as to form, on the image sensor (130), a sharp image of an area (ZOE) of an environment (E) outside the vehicle (200), remote from the vehicle (200), and to trigger the capture of a shot so as to obtain a corresponding image (IME) of this outside environment (E).

3. Device according to Claim 1, wherein the control module (120) is designed so that the duration (TV) of the series of shots (PV) of the observation window (210) is shorter than the duration of the series of shots (PVE) of the outside environment (E).

4. Device according to either of Claims 1 and 3, wherein the control module (120) is designed to control, reiteratively, the sequence of operations comprising:
- the triggering of the capture of the series of shots (PV) of the observation window; then
- the triggering of the capture of the series of shots (PE) of the outside environment (E).

5. Device according to Claim 4, wherein the control module (120) is designed to decrease the duration separating two successive series of shots (PV) of the observation window when the analysis module (126) detects an accumulation of matter located on the observation window (210).

6. Device according to one of Claims 1 to 5, wherein the control module (120) is suitable for controlling means for removing an accumulation of matter located on the observation window, when the analysis module (126) detects an accumulation of matter located on the observation window (210).

7. Device according to one of Claims 1 to 6, wherein the control module (120) is suitable for controlling means for signalling the presence of an accumulation of matter on the observation window, when the analysis module (126) detects an accumulation of matter located on the observation window (210).

8. Device according to one of Claims 1 to 7, wherein the controllable focusing means comprise a liquid lens having a controllable focal length (f).

9. Device according to one of Claims 1 to 8, wherein said observation window (210) comprises a windscreen of the automotive vehicle (200).

10. Device according to one of Claims 1 to 9, wherein said accumulation of matter comprises a drop of water.

11. Automotive vehicle (200) comprising a passenger compartment that is delimited by an observation window (210), provided with a detection device (100) according to one of Claims 1 to 10.

12. Detection method comprising steps of:
- controlling focusing means of an optical system (110), so as to form, on an image sensor (130), a sharp image of a first area (ZV1) of an observation window (210) delimiting a passenger compartment of an automotive vehicle (200);
- triggering the capture of a shot so as to obtain a first corresponding image (IM1) of the observation window;
- controlling said focusing means so as to form, on the image sensor (130), a sharp image of a second area (ZV2) of the observation window, closer to the optical system (110) than said first area (ZV1) of the observation window;
- triggering the capture of a shot so as to obtain a second corresponding image (IM2) of the observation window; and of
- detecting by means of a device (100) an accumulation of matter located on the observation window (210), by analysing said first and second images (IM1, IM2) of the observation window;
- controlling said focusing means, so as to focus, at successive instants in time, on areas (ZV1, ZV2, ..., ZVN) of the observation window (210) that are at least partially distinct, and to trigger the capture of a shot at each of said instants in time, so as to obtain, by means of this series of shots (PV) of the observation window, a series of respective images (IM1, IM2, ..., IMN) of the observation window;
- controlling said focusing means so as to focus on one area (ZOE) at least of the environment (E) outside the vehicle, and to trigger the capture of a series of shots (PVE) of the outside environment so as to obtain a series of corresponding images of the outside environment,
**characterized in that** it further comprises the following step:
- increasing the number (N) of images that are obtained in a series of shots (PV) of the observation window, when the analysis module (126) detects an accumulation of matter located on the observation window (210).
